# EUROPEAN PATENT APPLICATION

(11) **EP 1 043 674 A2**
(43) Date of publication of application: **11.10.2000**
(21) Application number: 00302900.6
(22) Date of filing: 06.04.2000
(51) Int. Cl.: G06F 17/60

(54) **Method for retrieval, update and storage of data**

(30) Priority: 09.04.1999 US 289281
(71) Applicant: Hewlett-Packard Company, Palo Alto, California 94304 (US)
(72) Inventor: Kang, Beng Kong, Singapore 268163 (SG); Chong, Yih Yeong, Singapore 640543 (SG)
(74) Representative: Jehan, Robert

(57) **Abstract**

A method for organizing information into fields of a record is disclosed. The information is captured as text in a text editor document. The method is implemented as an organize feature in a text editor. Using the organize feature, a user appends a field name before each identifiable field data in the document. The user then selects (406) these field names and associated field data for organizing. The organize feature parses the selected information. It then stores (512) each identifiable field data into a field of the record corresponding to the identified field name. The organize feature is extendable to include updating of a record. The record is retrieved (306) and displayed (308) with an appropriate field name appended for each retrieved field data. After making appropriate changes to the data, the organize feature described above stores (312) the updated information back into the record accordingly.

## Description

This invention relates to a method for retrieval, update and storage of data in a computing device and preferably to a user friendly method for displaying and updating retrieved data in a handheld personal computer (H/PC).

Electronic organizers such as personal digital assistants (PDA's) and handheld personal computers (H/PC's) have become increasingly popular for personal information management (PIM). Examples of such personal information include information of business contacts, appointments and tasks. These information are usually maintained in separate databases in a H/PC. An example of a H/PC is one running the WindowsCE operating system (OS) available from Microsoft, Redmond, Washington, USA. Each of the databases in the H/PC running WindowsCE is written to and read from through applications such as Contacts, Tasks and Calendar.

There are two aspects in the usage of an electronic organizer: the entry and the retrieval of data. In most of today's electronic organizers, the entry and display of retrieved data is made through a form fill-in user interface. Such a form fill-in user interface consists of separate fields on a screen. A user moves a cursor among the fields to enter and modify data where desired. Each field captures a different piece of data. Data in the various fields are stored as a record in a database. Data in each of the field in the form fill-in interface has a corresponding field in the record.

The form fill-in (also called fill-in-the-blanks) interface suffers from several disadvantages. The form fill-in interface is usually implemented as a separate and aesthetically appealing graphical user interface (GUI) screen, such as a dialog. The electronic organizer requires relatively more time to display such a GUI screen. The length of time taken by an electronic organizer to display such a GUI screen depends on the complexity of the GUI screen and the processing power of a central processor unit (CPU) of the electronic organizer.

Another disadvantage of such a form fill-in interface is the manner in which the GUI screen is presented on a display of the electronic organizer. The electronic organizer usually presents the GUI screen overlaying an original screen. This overlaying of the GUI screen may obstruct the view of relevant information in the original screen. The original screen may be of an application for quick capture of information, such as a notepad or jotter-page which contains information that needs to be transcribed into a Contacts record. The overlaying of the GUI screen over the original information makes transcribing difficult. The user may have to move the GUI screen to a different location on the display to effectively transcribe all of the original information. The display of an electronic organizer is usually small. There is not much room to manipulate such a GUI screen. In a worst case, the GUI screen may occupy the entire display such that it becomes impossible to view any of the original information when the GUI screen is displayed. In such a case, the user will have to switch between the original screen and the GUI screen to transcribe the information into the GUI screen. This method of transcribing is cumbersome.

Another disadvantage of the form fill-in interface is the arrangement of fields in the interface. To increase the aesthetic appeal of the form fill-in interface, the fields are usually demarcated and spread out. This arrangement of fields requires substantially more screen space. For records having a larger number of fields, a single screen may not be able to accommodate all the fields. In such a case, displayed data span several GUI screens. To locate a particular piece of information for viewing or updating, a user will have to traverse the GUI screens to a screen which holds the particular piece of information. In some cases, the user may even have to scroll within a field to locate a particular portion of data in the field. This is cumbersome if speed of updating data in a field is important.

The present invention seeks to provide improved updating and storage of data.

According to an aspect of the present invention, there is provided a method of updating data as specified in claim 1.

According to another aspect of the present invention, there is provided a program storage device as specified in claim 9.

According to another aspect of the present invention, there is provided a method of organising information as specified in claim 10.

The preferred embodiment provides a method for updating data stored in fields of a record, which may be implemented as a feature in a text editor application. This feature when activated retrieves data from the fields of the record. The feature then displays the data in a text editor document. In such a text editor environment, a user is able to modify the data using text-editing commands. After modifying the data, the feature allows the user to store the modified data back into the respective fields of the record.

Another embodiment provides a method for organizing information captured as text in a text editor document into fields of a record, which may be implemented as an organize feature in a text editor. The feature requires that a user append a field name before each identifiable field data in the document. The user is then required to select the field names and associated field data. The organize feature then parses the selected information to identify the field names and associated field data. The feature stores each field data into a field of the record which corresponds to the field name associated with the field data.

The preferred embodiment can alleviate some or all of the above-mentioned disadvantages of the prior art.

An embodiment of the present invention is described below, by way of example only, with reference to the accompanying drawings, in which:

Figure 1 is a block diagram of a computing device.

Figure 2 is a block diagram of a plurality of items of software residing in a memory of t he computing device in Figure 1. One of the items of software is a word processing application software which uses preferred embodiment of data retrieval, update and storage method.

Figure 3 is a flowchart illustrating the steps of data retrieval and storage in the word processing application in Figure 2.

Figure 4 is a flowchart illustrating the detailed steps of data retrieval of Figure 3.

Figure 5 is a flowchart illustrating the detailed steps of data storage of Figure 3.

Figure 6A is an example of a GUI screen of the word processing application prior to the retrieval of information.

Figure 6B is an example of the GUI screen in Figure 6A when used to retrieve a Contacts record.

Figure 6C is an example of the GUI screen in Figure 6A when the data of a selected Contacts record is retrieved and displayed on the GUI screen.

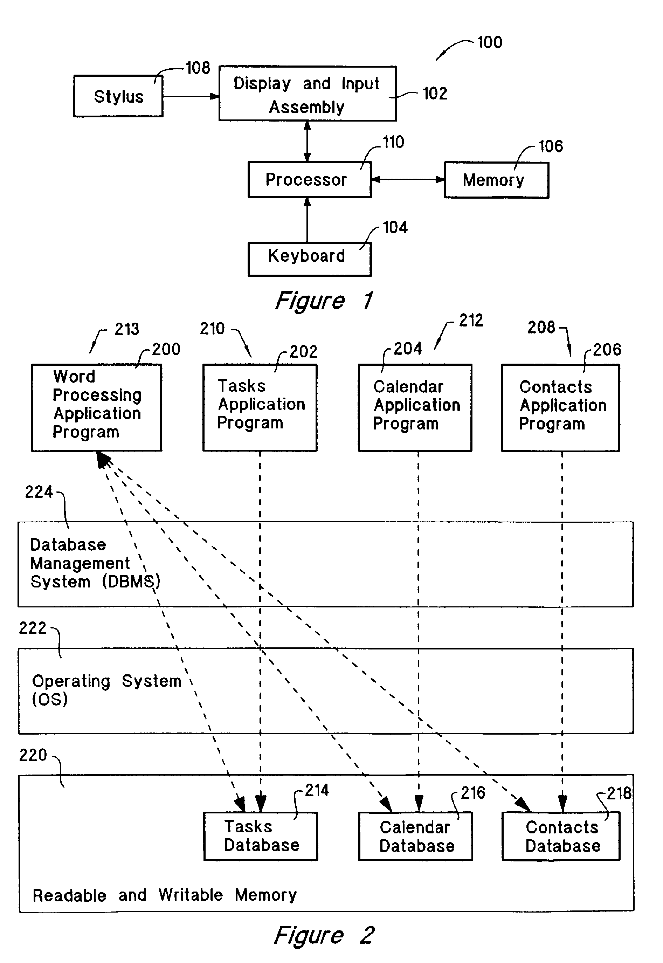

A word processing application embodying the invention is described as an application residing in a computing device such as a handheld personal computer (H/PC). Figure 1 is a block diagram of major components of a typical pen-based H/PC 100. The H/PC 100 has a display and input assembly 102, a QWERTY keyboard 104, a memory 106, a pen or stylus 108 and a processor 110. An operating system (OS) which manages the operations within the H/PC 100 resides in the memory 106. The display and input assembly 102 is both an input and an output device. When acting as an output device, the assembly receives data from the processor 110 and displays that data on a suitable display screen. The display screen is preferably a liquid crystal display (LCD). The input device of the display assembly 102 is preferably a thin, clear membrane which covers the LCD display and which is sensitive to the position of the stylus 108 on its surface. With such a structure, the membrane of the display assembly 102 serves as an input tablet.

The word processing application is implemented as a series of program instructions that resides in a program storage device, such as the memory 106 of the H/PC 100. The instructions are collectively known as an application program or simply a program. There are several methods of launching such a word processing application. One of the methods is to have an appropriate application icon appear on the display assembly 102 to provide a means for launching the application. To launch the application using such a method, a user activates the application icon with the stylus 108. This action causes a control circuit of the display assembly 102 to send a launch application signal to the processor 110. The processor 110 on detecting the signal causes the OS to run the word processing application program.

Figure 2 is a block diagram showing some software that resides in the memory 106 of Figure 1. The memory 106 besides containing the word processing application program 200 also contains other programs 202, 204, 206, which provide other applications 208, 210, 212 which are separate from the word processing application 213. Examples of such existing applications on a H/PC 100 are a Contacts application 208, a Tasks application 210 and a Calendar application 212. The user activates the Contacts application 208 to store and search for personal information such as names, addresses and telephone numbers of friends and business contacts. The Tasks application 210 is used to maintain a list of outstanding to-dos. The Tasks application 210 holds information such as task description, due dates and others. The user activates the Calendar application 212 to maintain a list of appointments, each of which logs information such as appointment description, date, time and venue.

The applications 208, 210, 212 maintain their respective information in data stores such as files (not shown) or databases 214, 216 and 218 that reside in a readable and writable portion 220 of the memory 106. Each related group of data, for example, a name, an address and a telephone number, is stored in a database as a record. The individual pieces of information in the record, that is, the name, address and telephone number are known as fields. A database contains many instances of each record type. It is important to distinguish between a type and an instance of both a record and a field. For example, an instance of a Contacts record type in the contacts database 218 consists of an instance of each of the following field types: name, address, telephone number and email address. As a further example, the name "John Smith" is an instance of the name field type. It is a common practice to drop the qualifiers "type" and "instance" (for both records and fields), and to rely on context to indicate which of the two is meant. The description that follows adopts this common practice.

To access the databases 214, 216, 218, the applications 210, 212, 213, 214 use services provided by a separate layer of software commonly known as a database management system (DBMS) 224. The DBMS 224 in turn uses services provided by an OS 222 to read and write to the databases 214, 216, 218. The DBMS 224 offers facilities such as facilities for creating databases, inserting data to and retrieving data from the databases 214, 216 and 218 and other facilities as is known to those skilled in the art.

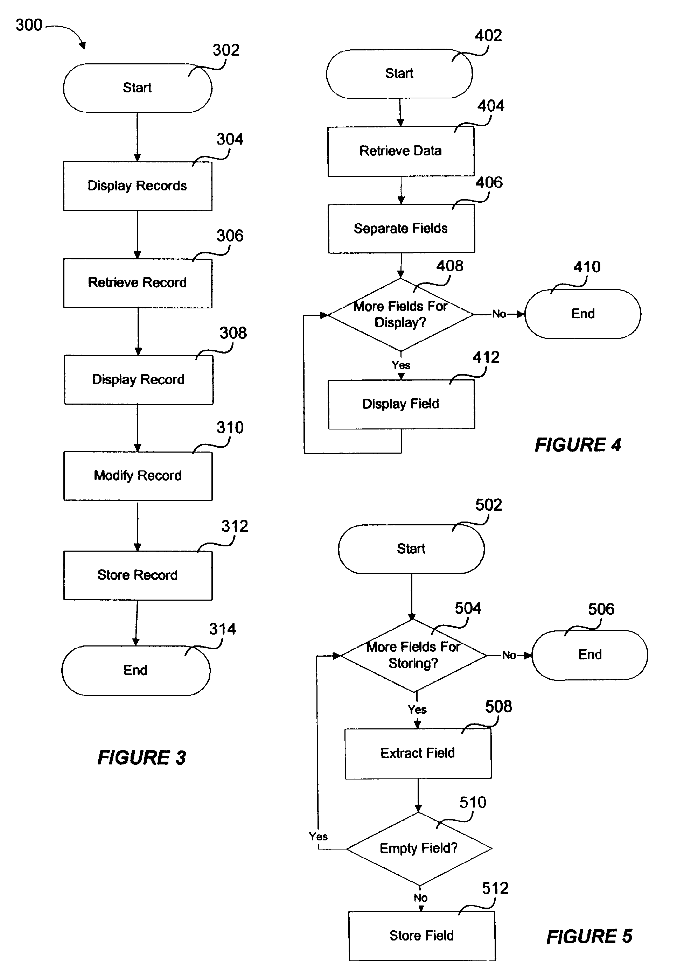

The operation sequence embodying the data retrieval, update and storage method is described with reference to Figures 3, 4 and 5. The method is described as implemented in but not limited to the word processing application 213. The method may be implemented in a text editor application instead. A text editor is usually less powerful than a word processor, lacking the latter's capability for text formatting. Both the word processor and the text editor however allow a user to move through a document using direction arrows or a scroll bar. The word processor and text editor also allow the free-form entry of text. This free-form entry of text does not restrict a user to any particular order of text entry. It also does not dictate any particular syntax of text, for example a date entry which must follow a syntax of mm/dd/yy in order to be recognizable by the H/PC for what it is. Without the need to follow a rigid sequence information entry allows the user to enter information in any sequence as the information comes to mind or is being conveyed.

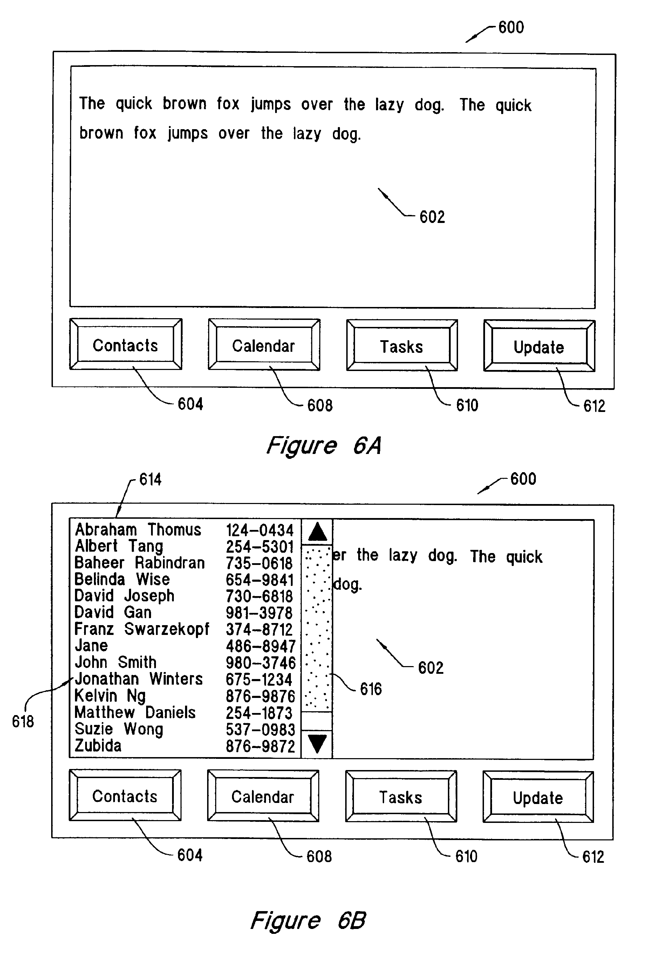

Figure 3 is a flowchart showing a sequence of steps 300 embodying the method of data retrieval, update and storage. Figure 6A is an example of a GUI screen of the word processing application showing buttons relevant to the described embodiment prior to the activation of the data retrieval, update and storage method. Once the word processing application is launched, the GUI screen 600 allows a user to enter and format text 602 to produce a document. An example of a word processing application is the Microsoft Word application, available from Microsoft Inc., Redmond, Washington, U.S.A. In addition to standard word processing menus and task bars (not shown), additional buttons, such as database buttons 604, 606, 608, and an Update button 612, are made available on the GUI screen 600 for implementing the method of data retrieval, update and storage. The description of the operation sequence which follows is based upon the activation of the Contacts button 604.

When the Contacts button 604 in the word processing application 213 is activated, the sequence starts in a START step 302 and proceeds to a DISPLAY RECORDS step 304. In this step 304, the application 213 displays records held in the Contacts Database 218 in a record-display panel 614 as shown in Figure 6B. This record-display panel may not be able to display all the records in the Contacts database. A scroll bar is provided to allow the user to scroll through the records to find a particular record of interest. Alternatively, a find tool (not shown) may be implemented to search the Contact Database 218 for the desired record. Such a find tool is known to those skilled in the art.

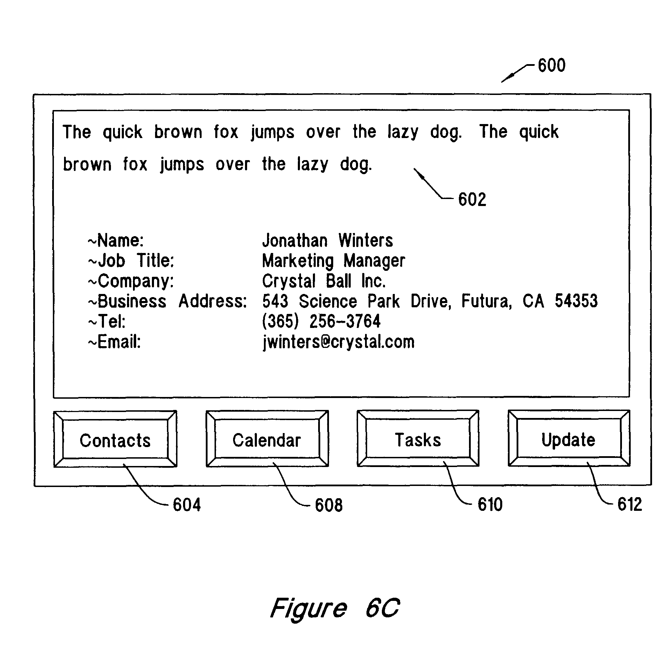

Assuming that a record "Jonathan Winters" 618 is selected from among the displayed records as shown in Figure 6B, the sequence next proceeds to a RETRIEVE RECORD step 306. In this step 306, the application retrieves data in the various fields of the selected record 618. The sequence proceeds to a DISPLAY RECORD step 308 where the application displays the retrieved data in the GUI screen 600 as shown in Figure 6C. The application can display the retrieved data at the end of the document or where the cursor is prior to the activation of the database buttons. The word processing application preferably displays the retrieved data in a format that distinguishes the retrieved data from the original text 602. The application does this by changing the format, such as font type, font size, color and other characteristics of the displayed data. The ability to vary the font size also allows the application to display as much of the retrieved data on a given screen size. The DISPLAY RECORD step 308 will be described in more details later.

The sequence proceeds to a MODIFY RECORD step 310, where the application allows the displayed data to be modified by the user. The user is able to use word processing commands applicable to text 602 in the document to modify the displayed data. After the user is satisfied with the modified data, the user may select, by highlighting, the data for storing. After the user has selected the data, the user activates the Update button 612 to commit the updated data to permanent storage. In such a case, the sequence will proceed to a STORE RECORD step 312. The STORE RECORD step 312 will be described in more details later. In this STORE RECORD step 312, the application may display a Confirmation screen (not shown) where the user is requested to confirm the organization of data carried out in the same step. This Confirmation screen displays data according to fields in which the data will be stored. If the user chooses to proceed with storing, the application will store data as displayed into corresponding fields in a record in the Contacts database. Alternatively, the application may simply store the record without consulting the user. The sequence then ends in an END step.

Figure 4 is a detailed flowchart of the RETRIEVE RECORD step 306 and the DISPLAY RECORD step 308 in Figure 3. The steps begin in a START step 402 and proceed to a RETRIEVE DATA step 404, where the application retrieves data either field by field or as a record into a buffer in the memory. For a Contacts application, the name "Jonathan Winters" is used as a unique key to access the record in the Contacts database. The sequence next proceeds to a SEPARATE FIELDS step 406, where the application separates and appends a field name to each field of the record in the buffer. Each field now has an association of a field name and a field data. The application delimits the field names with markers such as a prefix and a suffix. The prefix and suffix may be either printable or non-printable characters. This delimiting of the field name serves several purposes. The delimiters indicate that the name fields are different from user data and are preferably not to be modified in the document. The delimiters also enable the application to easily identify the field names in the subsequent STORE RECORD step 312. In the preferred embodiment, the prefix is a "~" character and the suffix a ":" character. Other distinguishing characters can be used to delimit the field names. Also, other forms of displaying the field names, such as underlining, italicizing or boldfacing the field names are also applicable. In addition to the appending of field names, the application also marks the field names and corresponding data as belonging to a Contacts record so that the application can easily identify which database to store the updated record to.

The sequence next proceeds to a MORE FIELDS FOR DISPLAY? decision step 408, where the application checks if there are further fields for display. If it is determined that there is no further field for display, the sequence ends in an END step 410. If it is determined that there is a further field for display, the sequence proceeds to a DISPLAY FIELD step 412, where the application displays the delimited field name and field data. Figure 6C shows how the fields in the Contacts record are displayed.

Using the above-described method of display, all the data in the various fields of the entire record are displayed. For empty fields, only the delimited field names are displayed. The associated data fields are left blank. A user may enter data in these blank fields for subsequent storing. As the user makes changes in the record on the document, the buffer gets updated accordingly.

Figure 5 is a detailed flowchart of the STORE RECORD step 312 in Figure 3. The steps begin at a START step 502 and proceed to a MORE FIELDS FOR STORING? decision step 504. In the MORE FIELDS FOR STORING decision step 504, the application checks if there are further fields for storing. If it is determined that there is no further field for storing, the sequence ends in an END step 506. If it is determined that there is a field for storing, the sequence proceeds to an EXTRACT FIELD step 508. In this step 508, the application parses the selected text in the buffer to detect a field name. The application recognizes text enclosed by the prefix and the suffix as a field name. The application treats text after the delimited field name and before a "newline" character as field data corresponding to the earlier identified field name. It should be noted that depending on the size of the display and font size used to display the record, data of some fields may not be accommodated in a single line and may be displayed wrapped over to one or more subsequent lines.

The sequence next proceeds to an EMPTY FIELD decision step 510, where the application determines if there is any data. If it is determined that the field is blank, the sequence proceeds to the MORE FIELDS FOR STORING? step 504. However, if it is determined that the field is not blank but contains text, the sequence proceeds to a STORE FIELD step 512, where the application commits the field data to permanent storage in the Contacts database. The application stores this data in a field of a Contacts record which corresponds to the earlier identified field name. After the STORE FIELD step 512, the sequence returns to the MORE FIELDS FOR STORING step 504 to determine if there are further data for storing.

It will be apparent to those skilled in the art that other changes in form and detail may be made with respect to the described embodiment.

For example, in the above disclosure, the keyboard 104 is described as a means to enter text in the word processing application and modify retrieved data. It will be expressly understood by those skilled in the art that a handwriting recognition or voice recognition means is equally applicable for carrying out such tasks of text editing. Also, instead of having a contiguous block of selected text in a document for storing, the selected text may consist of separate blocks of text in a document.

As a further example, the feature of data retrieval and storage need not be implemented only in a word processing application as described in the above preferred embodiment. The method of data retrieval and storage may be an independent application or as in the preferred embodiment, integrally implemented in another application such as a notepad or jotter application which allows the editing of text. In the latter case, the implementation may be in the form of a software function within the notepad and jotter applications.

As yet a further example, the DBMS 224 may be replaced by a simple set of file manipulation routines and databases 214, 216 and 218 may be implemented as other data stores such as simple files which the file manipulation routines can operate on. The file manipulation routines may extract data by fields or as an entire record.

In the description of the preferred embodiment, there is no mention of handling of erroneous conditions such as attempts by a user to modify, add or delete the field names and delimiters. Someone skilled in the art of computer programming can easily implement software routines to handle and correct such erroneous conditions. For unidentifiable fields due to the above erroneous conditions, the application may simply store the unrecognizable field name, if present, and data under a generic note field in a record.

In the preferred embodiment, the record is identified as belonging to a particular database by a record type marker. Another record identification method is also applicable. This record identification method uses field names to identify a record type. Some record type may contain a unique field name which allows the application on detecting the unique field name to identify the record as belonging to a particular database. Others may require more than one field names to uniquely identify the record type. If such a record identification method is available, a user can easily convert a record captured in text into a database record simply by preceding each field in the captured record with an appropriate delimited field name. After the appropriate field names have been added, the user can select the entire record and activate the Update button, as previously described for the preferred embodiment, to commit the record to permanent storage.

Also in the preferred embodiment, the Contacts database button is activated, as described, to present a list of Contacts records from which a user can select a record of interest. Other methods of retrieving a record are possible. One such method requires the parsing facility to be extended to look for special keywords. An example of a keyword is "find". To extract a Contacts record, the user simply enters the string "Find Jonathan Winters" in a text editor document, select the string and activate an Execute button. The Contacts database will be searched to retrieve a matching record. Another example of a keyword is "appt". A string "appt 21 Apr" will cause the Calendar database to be searched to return all appointments scheduled on the 21 April.

In the preferred embodiment, date fields are also entered in a free form manner. Due to the ambiguities involved with the many different date formats, a particular date format may be mandated by the application. When displaying a date field, the application may guide a user by providing separate sub-fields for day, month and year to avoid confusion. White spaces in field data may also be trimmed before storing in the STORE FIELD step 512.

The display of the record data also need not be restricted to the line by line format as described. Other formats are applicable as long as a field name and its associated data are displayed in a conspicuous association on the screen.

The disclosures in United States patent application no. 09/289,281, from which this application claims priority, and in the abstract accompanying this application are incorporated herein by reference.

## Claims

1. A method of updating data stored in fields of a record comprising the steps of:
retrieving the data;
displaying the data in a text-editor document;
modifying the data in response to text-editing commands received; and
storing the modified data back into the respective fields of the record in response to an update command.

2. A method according to Claim 1, comprising the step of displaying a field type information for each displayed field data of the record.

3. A method according to Claim 2, wherein the field type information is displayed as text adjacent to a displayed field data.

4. A method according to Claim 3, wherein the field type information includes delimiters.

5. A method according to Claim 4, wherein the delimiters comprise a prefix and a suffix.

6. A method according to Claim 5, wherein the prefix and the suffix are nonprintable characters.

7. A method according to Claim 5, wherein each field type information and associated field data are displayed as a separate field type and data pair and wherein the storing step comprises the steps of:
parsing each field type and data pair to identify text delimited by a prefix and a suffix as a field type information and other text as field data associated with the identified field type information; and
storing the identified field data to a field in the record corresponding to the identified field type information.

8. A method according to Claim 1, wherein the text-editor document is a word-processor document wherein a font size of the displayed data is adjustable by a user to control the amount of data that is viewable on a display.

9. A program storage device readable by a computing device, tangibly embodying a program of instructions, executable by the computing device to update data stored in fields of a record, comprising:
means for retrieving the data;
means for displaying the data in a text-editor document;
means for modifying the data in response to text-editing commands received; and
means for storing the modified data back into the respective fields of the record in response to an update command.

10. A method of organizing information captured as text in a text editor document for storage into a record in a data store of a computing device, wherein the information comprises data belonging to identifiable fields of the record, the method comprising the steps of:
appending a field type information before each identifiable field data in the text editor document in response to text-editing commands received;
receiving field types and associated field data as selected information for storing into the record in response to a selection command;
parsing the selected information to identify each field type and associated field data in response to an organize command;
storing each field data in the selected information into a field of the record corresponding to the field type associated with the field data.
